# EUROPEAN PATENT APPLICATION

(11) **EP 1 643 297 A1**
(43) Date of publication of application: **05.04.2006**
(21) Application number: 05255888.9
(22) Date of filing: 22.09.2005
(51) Int. Cl.: G02F 1/1337, G02F 1/133, G02F 1/1347

(54) **Viewing angle control apparatus and display device comprising same**

(30) Priority: 29.09.2004 JP 2004285291
(71) Applicant: KABUSHIKI KAISHA TOSHIBA, Tokyo 105-8001 (JP)
(72) Inventor: Hotta, Aira, Intellectual Property Division, Tokyo (JP); Tanaka, Masao, Intellectual Property Division, Tokyo (JP); Takato, Koki, Intellectual Property Division, Tokyo (JP)
(74) Representative: Granleese, Rhian Jane

(57) **Abstract**

A first alignment film (15) includes a plurality of first regions (21) and second regions (22). A second alignment film (16) includes a plurality of third regions (31) and fourth regions (32). The third region (31) corresponds to the first region (21) and the fourth region (32) corresponds to the second region (22). Alignment directions of the first region (21), the second region (22), the third region (31), and the fourth region (32) are different. By applying a voltage, a transmittance ratio of the first region (21) and the second region (22) is above 5 in an angle range above 30°, and below 40° from a normal direction, and a transmittance of the first alignment film (15) from the normal direction is above 90% of the transmittance in case of non-applying the voltage, if the retardation Δn·d of the TN LC layer is within the range from 1.5μm to 3.0μm.

## Description

### CROSS-REFERENCE TO RELATED APPLICATIONS

This application is based upon and claims the benefit of priority from prior Japanese Patent Application P2004-285291, filed on September 29, 2004; the entire contents of which are incorporated herein by reference.

### FIELD OF THE INVENTION

The present invention relates to a viewing angle control apparatus for changing a viewing angle of a display screen by applying a voltage.

### BACKGROUND OF THE INVENTION

A liquid crystal display apparatus uses a liquid crystal material having optical anisotropy. Accordingly, the liquid crystal display apparatus has a different visibility feature (viewing feature) based on a viewing angle. The viewing feature makes it difficult for many persons to view display contents. On the other hand, the viewing feature is utilized to secure secret information or personal information. Briefly, by using the viewing feature, displayed contents are visible from a front direction, but are not visible from an oblique direction. This display is called a narrow viewing angle display. By using the narrow viewing angle display, in case of reading/writing a secret document at a public place using a portable terminal, persons, except for a user of the portable terminal, are prevented from viewing the document. Furthermore, the user can read/write a personal mail without worrying about neighboring persons.

Technique related to the narrow viewing angle display is disclosed in following references.
(1) Japanese Patent Disclosure (Kokai) P2001-264768 (reference 1). This reference is directed to a liquid crystal apparatus by which display contents are difficult to be viewed from directions except for the front direction. Concretely, an alignment film is divided into a plurality of regions, and alignment directions of neighboring regions are set to be different.
(2) Japanese Patent Disclosure (Kokai) P2004-133334 (reference 2). This reference is directed to a spy (peeping by others) prevention apparatus installable onto a general liquid display apparatus.

If a display status of narrow viewing angle (narrow viewing angle display) and a display status of wide viewing angle (wide viewing angle display) can be switched, it is very convenient for the user. However, in the liquid crystal display apparatus of the reference 1, in case of applying an image signal including a gray level on the display, a pattern (as an eyesore for a person to view display contents) by alignment division of liquid crystal is visible. Accordingly, this display apparatus is applied to the narrow viewing angle display only, and switching to the wide viewing angle display is difficult. Furthermore, a normal image signal includes a plurality of gray levels. In this case, the pattern is also recognized from the front direction. Accordingly, image quality drops.
On the other hand, in the liquid crystal display apparatus of the reference 2, the narrow viewing angle display and the wide viewing angle display can be switched. However, in case of the narrow viewing angle display, for example, pattern contrast along an oblique (30°)direction from a normal direction on the display is low, and the spy prevention range is apt to be narrow. If a signal voltage is adjusted to heighten a pattern contrast from the oblique (30°) direction, the pattern leading to eyesore is also recognized from the front direction, and brightness of a panel (screen) from the front direction is apt to fall.

### SUMMARY OF THE INVENTION

The present invention is directed to a viewing angle control apparatus for preventing unwanted viewing or spying from an oblique direction on a display screen while high visibility from a front direction is maintained.

According to an aspect of the present invention, there is provided an apparatus for controlling a viewing angle, comprising: a first transparent substrate including a first transparent electrode; a first alignment film including a plurality of first regions and second regions, the first alignment film being on the first transparent substrate; a liquid crystal layer comprising a liquid crystal material aligned with twist, the liquid crystal layer being on the first alignment film; a second alignment film including a plurality of third regions and fourth regions, a third region corresponding to the first region and a fourth region corresponding to the second region, alignment directions of the first region, the second region, the third region, and the fourth region being different, the second alignment film being placed on the liquid crystal layer; a second transparent substrate including a second transparent electrode, the second transparent substrate being on the second alignment film; and a polarizer on the second transparent substrate; wherein, by applying a voltage to the first transparent electrode and the second transparent electrode, a transmittance ratio of the first region and the second region is above 5 in an angle range above 30° and below 40° from a normal direction of the liquid crystal layer, and a transmittance of the first alignment film from the normal direction is above 90% of the transmittance in case of non-applying the voltage.

According to another aspect of the present invention, there is also provided a display apparatus, comprising: a display element including a first polarizer on a main face; and a viewing angle control apparatus on the main face; wherein the viewing angle control apparatus comprises: a first transparent substrate including a first transparent electrode; a first alignment film including a plurality of first regions and second regions, the first alignment film being on the first transparent substrate; a liquid crystal layer comprising a liquid crystal material aligned with twist, the liquid crystal layer being on the first alignment film; a second alignment film including a plurality of third regions and fourth regions, a third region corresponding to the first region and a fourth region corresponding to the second region, alignment directions of the first region, the second region, the third region, and the fourth region being different, the second alignment film being placed on the liquid crystal layer; a second transparent substrate including a second transparent electrode, the second transparent substrate being on the second alignment film; and a second polarizer on the second transparent substrate; wherein, by applying a voltage to the first transparent electrode and the second transparent electrode, a transmittance ratio of the first region and the second region is above 5 in an angle range above 30° and below 40° from a normal direction of the liquid crystal layer, and a transmittance of the first alignment film from the normal direction is above 90% of the transmittance in case of non-applying the voltage.

### BRIEF DESCRIPTION OF THE DRAWINGS

Fig. 1 is a sectional plan of a viewing angle control apparatus according to one embodiment.

Fig.2 is a schematic diagram of alignment status of an alignment film on a transparent substrate.

Fig.3 is a schematic diagram of alignment status from a front direction on a pair of facing transparent substrates.

Figs.4A and 4B are schematic diagrams of the viewing angle control apparatus carried on a liquid crystal display apparatus.

Fig.5 is a schematic diagram of direction of liquid crystal molecules in case of applying voltage to the viewing angle control apparatus.

Fig.6 is a schematic diagram of direction of liquid crystal molecules from a normal direction on the viewing angle control apparatus.

Fig.7 is a schematic diagram of alignment status from a front direction on a pair of facing transparent substrates each of which alignment film is divided into units of three regions.

Fig.8 is a schematic diagram of direction of liquid crystal molecules of the units of three regions from a normal direction on the viewing angle control apparatus.

### DETAILED DESCRIPTION OF THE EMBODIMENTS

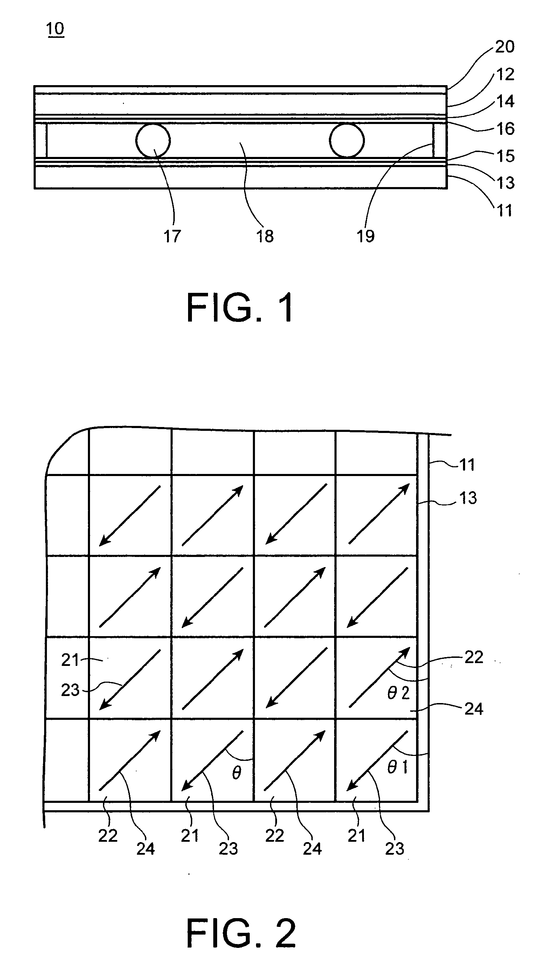

Hereinafter, various embodiments will be explained by referring to the drawings. Fig.1 is a sectional plan of a viewing angle control apparatus 10 according to one embodiment. The viewing angle control apparatus 10 includes transparent substrates 11 and 12, transparent conductive films 13 and 14, alignment films 15 and 16, a spacer 17, a liquid crystal material 18, a seal material 19, and a polarizer 20.

The transparent substrates 11 and 12 composing transparent material such as glass are placed facing each other. The transparent conductive film 13 is set on the transparent substrate 11. The alignment film 15 comprising alignment-processed polyimide (to have a plurality of alignment directions on the surface) is set on the transparent conductive film 13. On the other hand, the transparent conductive film 14 is set on the transparent substrate 12, and the alignment film 16 comprising alignment-processed polyimide (to have a plurality of alignment directions on the surface) is set on the transparent conductive film 14. The transparent substrates 11 and 12 are, for example, placed facing each other with a gap formed by the spacer 17 having a diameter of several microns. The liquid crystal material 18 fills the gap. The gap is sealed with coating by the (epoxy) seal material 19. The polarizer 20 is attached on the transparent substrate 12 to correspond with alignment direction. In order to keep the gap between the transparent substrates 11 and 12, except for the spacer 17, a pillar may be set between the transparent substrates 11 and 12. Furthermore, in case of a small-sized display, the gap is kept by the seal material 19 only.

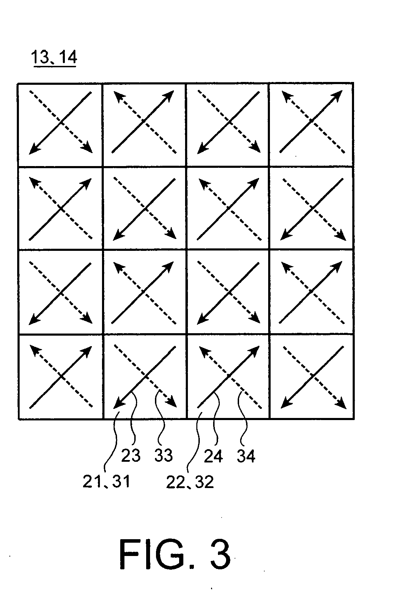

Fig.2 is a schematic diagram of alignment status of the alignment film 15 placed on the transparent substrate 11. The alignment film 15 is divided into regions 21 and 22 of which alignment directions 23 and 24 are different. In Fig.2, the regions 21 and 22 are located by checker shape, and they were alignment-processed so that alternative alignment directions are reversed. Alignment directions 23 and 24 of the regions 21 and 22 are mutually reverse by 180° , and angles *θ* 1 and *θ* 2 of each alignment direction from an edge of the transparent substrate 11 is respectively 45° . The alignment film 16 on the transparent substrate 12 is divided into regions 31 and 32 each corresponding to the regions 21 and 22 of the alignment film 15 (as shown in Fig.3 explained afterwards).

The regions 21, 22, 31 and 32 are not limited to the checker board shape. They may be, for example, a letter, a visible figure, or a character. In this case, the letter may be a character string as a message. Furthermore, as explained afterwards, the alignment films 15 and 16 may be divided into three (or more than three) regions having different alignment directions.

Fig.3 is a schematic diagram of alignment status from a front side of the transparent substrate 11 in case of facing the transparent substrates 11 and 12. The regions 21 and 22 of the alignment film 15 are placed in correspondence with the regions 31 and 32 of the alignment film 16. Alignment directions 23 and 24 of the alignment film 15 are represented by a solid line arrow and alignment directions 33 and 34 of the alignment film 16 are represented by a dotted line arrow. A solid line and a dotted line represent a view from the front side of the alignment films 15. As shown in Fig.3, alignment directions 23 and 33 of the regions 21 and 31 are orthogonal. Furthermore, alignment directions 24 and 34 of the regions 22 and 32 are orthogonal. As a result, the liquid crystal material 18 is aligned on condition that a twist angle is 90° . Briefly, the liquid crystal material 18 comprises TN (Twisted Nematic) alignment that liquid crystal molecules are aligned with twist.

By carrying the viewing angle control apparatus 10 on a display element of the liquid crystal display apparatus, viewing feature of the display element can be controlled. Briefly, by carrying the viewing angle control apparatus 10 on the display element of wide viewing angle, these apparatuses are regarded as a display apparatus, and wide viewing angle status and narrow viewing angle status can be switched.

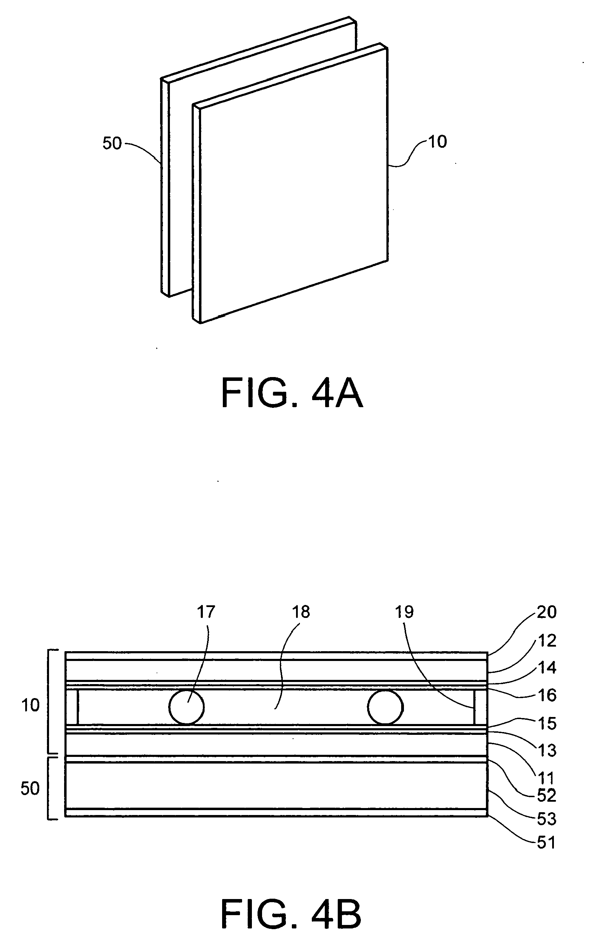

Figs.4A and 4B are respectively an outward plan view and a sectional plan view of a viewing angle control apparatus 10 on a liquid crystal display apparatus 50. In Fig.4A, in order to simplify the explanation, the viewing angle control apparatus 10 is separated from the liquid crystal display apparatus 50.

In case of carrying the viewing angle control apparatus 10 on the liquid crystal display apparatus 50, a fixation member such as a projection shape or a clip shape or a fixation means such as an adhesive can be used. If a size of the viewing angle control apparatus 10 is smaller than a screen of the liquid crystal display apparatus 50, the viewing angle control apparatus 10 may be put on a transparent acryl board and then put on the liquid crystal display apparatus 50.

The liquid crystal display apparatus 50 has polarizes 51 and 52 and a liquid crystal cell 53. The liquid crystal cell 53 is a cell filled with a liquid crystal material and includes components corresponding to the transparent substrates 11 and 12, the transparent conductive films 13 and 14, the alignment films 15 and 16, the spacer 17, the liquid crystal material 18, and the seal material 19. However, this cell 53 is not divided into regions such as the regions 21 and 22 of the alignment film 15.

The polarizer 52 is placed between the viewing angle control apparatus 10 and the liquid crystal cell 53, and shared by these. The polarizer 52 and the polarizer 20 as a pair are placed on both sides of the viewing angle control apparatus 10, and regulate feature of the viewing angle control apparatus 10. In this case, it is desirable that absorption axes of the polarizers 52 and 20 are orthogonal (or parallel). The viewing angle control apparatus 10 may be carried on a display apparatus without a polarizer. In this case, the polarizer is attached on a surface of the transparent substrate 11.

Hereinafter, operation of the viewing angle control apparatus 10 is explained. In case of not applying a voltage between the transparent conductive films 13 and 14, liquid crystal molecules in the liquid crystal material 18 are aligned in parallel with alignment directions of the transparent substrates 11 and 12. In this case, a surface of the viewing angle control apparatus 10 is transparent. Accordingly, a viewing angle range (viewing angle) able to view display contents of the liquid crystal apparatus 50 does not change before and after carrying the viewing angle control apparatus 10.

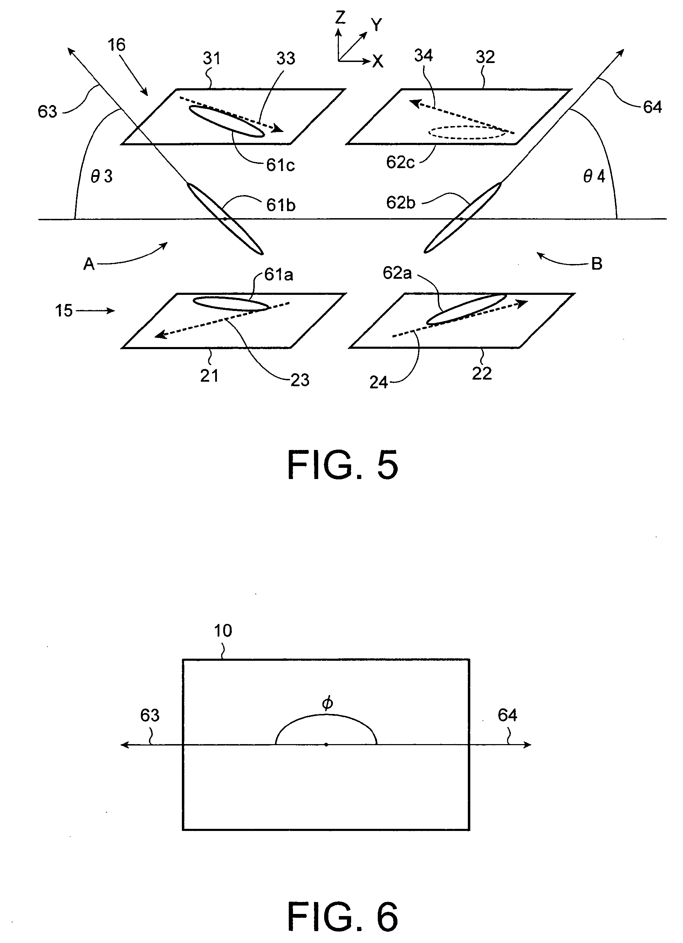

Fig.5 is a schematic diagram of directions of liquid crystal molecules of the liquid crystal material 18 in case of applying a voltage (For example, a rectangle wave of frequency 60Hz) to the transparent conductive films 13 and 14 of the viewing angle control apparatus 10. Fig.6 is a front view representing directions of molecules on the viewing angle control apparatus 10 from a normal direction. In Fig.5, liquid crystal molecules 61 and 62 are shown in space A between the regions 21 and 31, and in space B between the regions 22 and 32 of the alignment films 15 and 16. The liquid crystal molecules 61 and 62 in an adjacent area of the alignment film 15, an intermediate area between the alignment films 15 and 16, and an adjacent area of the alignment film 16, are respectively liquid crystal molecules 61a, 61b, 61c, 62a, 62b, and 62c.

The liquid crystal molecules 61 and 62 are spirally disposed as a whole. In adjacent areas of the alignment films 15 and 16, the liquid crystal molecules 61 and 62 are disposed with a pretilt angle based on each alignment direction 23, 24, 33 and 34. In the intermediate area between the alignment films 15 and 16, the liquid crystal molecules 61 and 62 are rotated (twisted) from each alignment direction 23, 24, 33 and 34, and each tilt angle (inclination) is large (rising of the liquid crystal module).

In this case, rising vectors 63 and 64 are defined as each direction of liquid crystal modules 61b and 62b in center area of the liquid crystal layer 18. The directions of the liquid crystal modules 61b and 62b in the center area of the liquid crystal layer 18 affect the viewing feature. Inclination angles *θ* 3 and *θ* 4 of the rising vectors 63 and 64 are tilt angles *θ* 3 and *θ* 4 of the liquid crystal molecules 61b and 62b, and they are defined as the rising angle of the liquid crystal molecules 61 and 62. Furthermore, directions of the rising vectors 63 and 64 represent directions of the liquid crystal molecules 61b and 62b, and they are defined as the rising direction of the liquid crystal molecules 61 and 62.

Rising angles *θ* 3 and *θ* 4 depend on applied voltage. If the voltage is below a threshold (including the case of non-applying a voltage), the rising angles *θ* 3 and *θ* 4 are almost zero (almost horizontal, to be exact, near the pretilt angle). The rising angles *θ* 3 and *θ* 4 begin to change from the applied voltage neighboring the threshold, and approach 90° (vertical) as the applied voltage becomes large. In this case, the rising angles *θ* 3 and *θ* 4 are not largely different in spaces A and B. Briefly, the rising angles *θ* 3 and *θ* 4 do not substantially have area-dependency (In case of applying the same voltage to the areas 21 and 22, the rising angles *θ* 3 and *θ* 4 are almost equal.).

The rising direction only has a very small voltage-dependency. Briefly, even if the applied voltage changes, the rising direction almost does not change. On the other hand, the rising direction depends on areas 21 and 22. Alignment status of the liquid crystal material 18 is different between spaces A and B. Accordingly, directions (rising direction) of rising vectors 63 and 64 are different. As shown in Fig.6, the vectors 63 and 64 respectively rise along left and right directions (X positive direction and X negative direction) on a surface of the viewing angle control apparatus 10. Briefly, rising directions of liquid crystal molecules 61 and 62 are opposite (difference of angle difference *φ* = 180°).

In comparison with view along the normal direction on the surface of the viewing angle control apparatus 10, light and dark of the display are reversed toward directions of the rising vectors 63 and 64. In case of viewing spaces A and B from the left direction (X positive direction) of Fig.5, the space A is dark and the space B is light. On the other hand, in case of viewing spaces A and B from the right direction (X negative direction) of Fig.5, the space A is light and the space B is dark. Briefly, even if the spaces A and B are viewed from either of the left and right directions, one of the areas 21 and 22 is dark, and almost half of the area of a screen of the liquid crystal display apparatus is hidden. In this way, spying (peeping by others) from the left and right directions on the screen is prevented.

If alignment directions of the polarizers 20 and 52 are parallel, the viewing angle control apparatus 10 is under a condition of non-transmission of light (black display) at non-application time of voltage, and display contents of the liquid crystal display apparatus 50 are difficult for a person to view. On the other hand, at application time of voltage, a screen of the viewing angle control apparatus 10 is transparent, and the display contents of the liquid crystal display apparatus 50 can be viewed. In this case, the higher the voltage applied to the viewing angle control apparatus 10 is, the wider the viewing angle of the screen of the liquid crystal display apparatus 50 is. By applying a saturation voltage (normally, 4~5V), the viewing angle is the widest and used as a wide viewing angle mode.

On the other hand, if alignment directions of the polarizers 20 and 52 are orthogonal, the viewing angle control apparatus 10 is transparent at non-application time of voltage, and display contents of the liquid crystal display apparatus 50 can be recognized from wide viewing angle (wide viewing angle mode). In proportion to application of voltage, alignment division patterns (checker pattern) on the viewing angle control apparatus 10 can be gradually recognized. In case of viewing from an oblique direction (oblique angle from the normal direction is above some angle), the screen of the viewing angle control apparatus 10 cannot be viewed (narrow viewing angle mode). If the applied voltage is above the saturation voltage value, an incident light to the viewing angle control apparatus 10 cannot transmit through the apparatus 10. Accordingly, even if a user views along the normal direction on the display, the viewing angle control apparatus 10 is under a condition of black display.

In this way, the viewing angle control apparatus 10 can be independently driven from the liquid crystal display apparatus 50 for displaying information. By adjusting the applied voltage, a wide viewing angle mode and a narrow viewing angle mode can be switched. In the wide viewing angle mode, a fixed pattern (checker pattern) cannot be recognized, and the liquid crystal display 50 excellently displays contents from all viewing directions. On the other hand, in the narrow viewing angle mode, the fixed pattern (checker pattern) irrelevant to display contents of the liquid display apparatus 50 can be seen from oblique direction (especially, the left and right directions). Accordingly, spying is prevented so that display contents cannot be watched from an arbitrary direction except for the front direction (normal direction).

As mentioned-above, in case that alignment directions of the polarizers 20 and 52 are either parallel or orthogonal, the viewing angle control apparatus 10 can be operated. Hereinafter, an example is explained in case that the alignment directions of the polarizers 20 and 52 are orthogonal. (In case that the alignment directions of the polarizers 20 and 52 are parallel, light and dark of display is reversed. However, the same effect of spying prevention can be obtained.)

In condition that the viewing angle control apparatus 10 is carried on the liquid crystal display apparatus 50 without applying voltage, viewing feature of the liquid display apparatus 50 does not change, and display contents can be recognized from a wide viewing angle. When a voltage neighboring the threshold voltage is applied to the viewing angle control apparatus 10, visibility from a front direction (normal direction) almost does not change, but a checker pattern is recognized from oblique directions (left and right directions 23 and 24). As mentioned-above, rising directions of liquid crystal molecules are opposite in areas 21 and 22.

By gradually increasing the voltage value, a pattern contrast (checker pattern) from oblique direction heightens, and it is difficult for a person to watch display contents of the liquid crystal display apparatus 50. By further increasing the voltage value, checkers pattern can be seen from the front direction by the person, and it is confirmed that brightness of the liquid crystal display apparatus 50 greatly falls. Accordingly, it is decided that effect of spying prevention changes and viewing feature from the front direction is affected by the applied voltage value.

We examine a condition that visibility from the front direction is high and the effect of spying prevention is high. First, as for display from the front direction, we examine as follows.
By lowering the brightness of the display, ten testees respectively reply by either "permission" or "non-permission" about whether fallen brightness is permissible. As a result, all testees reply "permission" in case that the fallen brightness is above 90% of initial brightness. In case that the fallen brightness is below 70% of the initial brightness, testee's reply disperses. In case that the fallen brightness is below 50% of the initial brightness, all testees reply "non-permission".

Next, we examine a pattern contrast (ratio of brightness (transmittance ratio) of areas 21 and 22). By changing the pattern contrast, ten testees respectively reply either "permission" or "non-permission" about whether the pattern is an eyesore. As a result, nine testees reply "permission" in case that the pattern contrast is below 1.2, and only one testee replies "non-permission" for the pattern contrast 1.2. In case that the pattern contrast is above 1.5, four testees reply "non-permission". In case of the pattern contrast 2, all testees reply "non-permission".

Next, we examine effect of spying prevention. First, on condition that one testee stands in front of the liquid crystal apparatus 50 carrying the viewing angle control apparatus 10, five testees observe the liquid crystal display apparatus 10 from the side direction of the one testee. Each of five testees indicates his/her desired view angle, and replies a pattern contrast difficult for each testee to see from the view angle. As a result, a range of the view angles is 30°~40° , and the pattern contrast effective for observation prevention is above 5.

Briefly, in case that brightness from the front direction is above 90%, the pattern contrast is below 1.2, and the pattern contrast from the oblique (30°)direction is above 5, viewing feature from the front direction does not so fall and effect of observation prevention is high. In this case, by considering parallax occurred from a space between left and right eyes of a person, the pattern contrast from the front direction is set as contrast viewed from angle range within oblique (left and right) 5° .

The brightness and the pattern contrast from the front direction, and the pattern contrast from the oblique direction, are controlled by applied voltage. However, these parameters are not mutually independent, and it is not easy to satisfy both conditions of the front direction and the oblique direction. As an examination result to satisfy these conditions, an optical condition of the liquid crystal layer, i.e., a product of a birefringence Δn of the liquid crystal material 18 and a cell gap (thickness) d of the liquid crystal layer, affects the viewing feature. In case that the product Δn · d (retardation) is within 1.5~3.0 *µ*m, the above condition is satisfied.

In case that Δn · d is below 1.5 *µ*m, by adjusting the voltage so that the pattern contrast from oblique (left and right) 30° direction is 5, viewing feature from the front direction largely falls. Furthermore, if Δn · d is below 1.5 *µ*m, the transmittance ratio of the viewing angle control apparatus 10 drops, and color caused by the retardation is noticeable. On the other hand, in case that Δn · d is above 3 *µ*m, viewing feature is symmetrical for left and right, and the pattern contrast cannot be maintained. The pattern contrast above 5 from the oblique (30°) direction cannot be maintained, and effect of spying prevention is not sufficiently obtained.

In case that Δn · d is within 1.5~3.0 *µ*m, a voltage limit of peak value that pattern contrast is above 10 exists in an angle range of 30°~40° of oblique directions. By adjusting the voltage within the voltage limit, viewing angle having high effect of spying prevention can be changed. Especially, in a range that Δ n · d is within 1.8~2.5 *µ* m, the voltage adjustment range of spying prevention is wide, and a viewing angle range of spying prevention matched with the user's preference can be easily set.

In general, the birefringence Δn 0.05∼0.3 of the liquid material 18 used for the viewing angle control apparatus 10 has a stable feature, and a highly reliable apparatus can be provided. In case that a cell gap of the liquid crystal material is below 2 *µ*m, the gap is narrow, and transparent conductive films 13 and 14 of transparent substrates 11 and 12 may electrically short. Furthermore, in case that the cell gap d is above 30 *µ*m, the gap is wide and the parallax causes trouble. In case that the cell gap is within 5~20 *µ*m, the apparatus having a stable gap during manufacture process can be provided.

Furthermore, in the viewing angle control apparatus 10, in case that a twist angle of liquid crystal molecules (of liquid crystal material 10) of alignment division areas 21 and 22 is 90°, the angle of the polarizer 20 can be easily adjusted. In this case, a direction of the absorption axis of the polarizer 20 is better set in parallel with (or orthogonal to) alignment direction of the liquid crystal molecules.

Furthermore, as for spy prevention, unwanted observation from the left and right directions mainly occurs. Accordingly, it is most effective that visible direction of checker pattern (as the eyesore) is seen from the left and right directions. In this case, alignment division direction is set as two directions (left and right directions).

Furthermore, in the viewing angle control apparatus 10, the alignment division pattern (checker pattern) needs a size larger than a visible size. Concretely, the pattern needs a size above 1mm². In case of the size below 1mm², the pattern cannot be recognized. From the oblique direction, the display is viewed as if brightness of all areas falls, and display contents are recognized. On the other hand, in case of the size above 1cm², screening effect of the display drops.

Furthermore, in the viewing angle control apparatus 10, a size of each alignment division region is not necessarily equal. In case of two division of which ratio of one region to the other region is within 40~60%, the same effect is obtained. The pattern is not necessarily a regular pattern, and may not be the same shape. In case of irregular pattern, display contents cannot be recognized. Furthermore, one of two division regions may be connected as one pattern. By using one connected pattern, alignment processing is easy. For example, after rubbing all surface of the alignment films 15 and 16, a flat plate (an opening corresponding to non-connected region is set) of shape corresponding to the connected pattern is used as a mask. By this rubbing, a plurality of regions each having different alignment direction can be set on the alignment film.

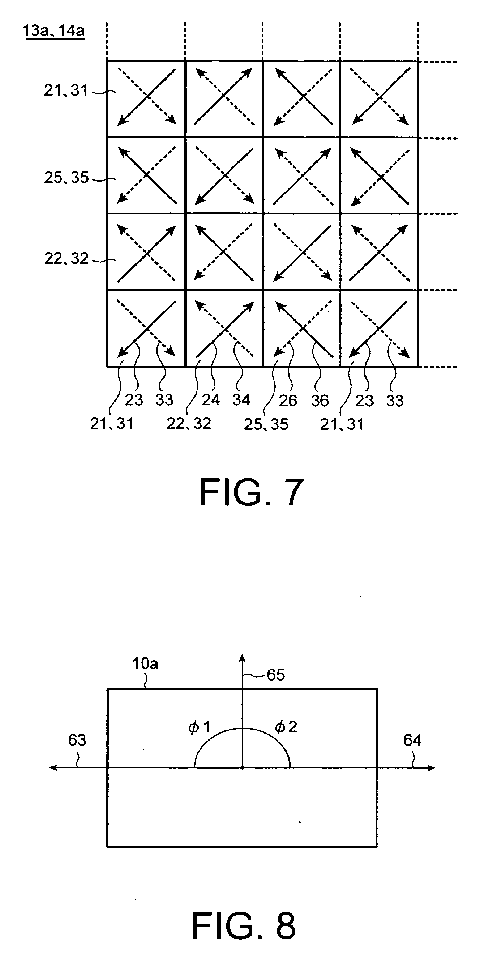

The alignment films 15 and 16 may be respectively divided into three (or more than three) regions each having a different alignment direction. Fig.7 is a schematic diagram of the alignment films 15 and 16 each divided into three regions 21, 22, 25, 31, 32, and 35. Briefly, in case of facing the transparent substrates 11 and 12, Fig.7 represents alignment status from the front side of the transparent substrate 11 in correspondence with Fig.3.

In Fig.7, three regions 21, 22, and 25 of the alignment film 15 respectively correspond to three regions 31, 32, and 35 of the alignment film 16. Furthermore, alignment directions 23 and 33 of regions 21 and 31 are orthogonal, alignment directions 24 and 34 of regions 22 and 32 are orthogonal, and alignment directions 26 and 36 of regions 25 and 35 are orthogonal.

Fig.8 is a front view of the viewing angle control apparatus 10 representing rising vectors 63, 64, and 65 of liquid crystal molecules of regions 21, 22, and 25 from the normal direction. The rising vectors 63, 64, and 65 respectively direct to the left, right, and upper directions. As a result, an orientation angle difference *φ* 1 between the rising vectors 65 and 63, and an orientation angle difference *φ* 2 between the rising vectors 65 and 64, are respectively 90° as an absolute value.

As shown in Fig.8, the rising vectors 63, 64, and 65 respectively direct to the left, right, and upper directions. Accordingly, in addition to spy prevention from the left and right directions, spying from the upper direction can be effectively prevented. Briefly, as for spying from the upper direction, the region 25 is viewed as a black display, and viewing of the display contents can be prevented. The regions 21, 22, and 25 respectively contribute to spying prevention from the left, right, and upper directions.

In Fig.7, three regions 21, 22, and 25 are arranged in order. However, this order may be arbitrarily changed. Furthermore, the alignment films 15 and 16 may be divided into at least four regions.

Hereinafter, various embodiments (manufacturing method) of the present invention are explained.
(Embodiment 1)
First, two glass substrates (thickness 0.7mm) of diagonal line 7inch on which an ITO thin film (film thickness 500Å) is formed are prepared. After cleaning the two glass substrates, polyimide AL1051 for liquid crystal alignment film is coating by a spin coat. Then, the two glass substrates are baked in a clean oven at 200°C for one hour. As a result, two polyimide alignment films of which film thickness is about 500~1000Å are obtained.

Next, alignment processing by rubbing is executed. In this case, alignment processing by mask rubbing is executed so that two regions each having different direction are mutually arranged. First, uniform rubbing processing is executed on all surface of the polyimide film of upper side substrate. Next, a metal mask on which square patterns (one side is 4mm) are formed is placed on the upper side substrate. By mask rubbing, two regions of which rubbing directions are different are obtained.

On the upper side substrate, epoxy sealing material is coated by a seal dispenser. On the lower side substrate, corpuscles of spherical shape (9 *µ*m) are dispersed as a spacer. Next, the upper side substrate and the lower side substrate are assembled so that corresponding regions of alignment division are correctly positioned between two substrates. Then, assembled two substrates are heated for one hour in the oven (100°C) to cure the seal material.

By injecting a liquid crystal material MJ29870 into a liquid crystal cell, Δn · d of the liquid crystal layer is set as 1.6 *µ*m. An injection opening is sealed by UV curing resin. On one side of the liquid crystal cell of alignment division, a polarizer is assembled so that the absorption axis is parallel with the rubbing direction.

Electrodes are extracted from the two (upper and lower) substrates and connected to a wave generation apparatus. This viewing angle control apparatus is carried on a liquid crystal panel, and a signal voltage is applied. The voltage is adjusted so that pattern contrast from oblique (30°) direction is 6. In this case, pattern contrast 15 from oblique (40°) direction is obtained, which is effective to avoid unwanted observation. On the other hand, pattern (checkers) is not recognized from the front direction, which is effective for a user to view display contents from the front direction. In case of measuring a pattern contrast from the front direction, the pattern contrast is 1.04 and the brightness is 98% compared with the initial brightness. As a result, the viewing angle control apparatus having excellent features is obtained.

### (Embodiment 2)

A viewing angle control apparatus is manufactured on condition that the liquid crystal material 18 is ZLI5049 and Δn · d of the liquid crystal layer is 2 *µ*m by a gap spacer 10 *µ*m. Other conditions are the same as in embodiment 1. By adjusting a voltage so that the pattern contrast from oblique (30°) direction is 5, display contents are not recognized, the pattern (checkers) on a screen from the front direction is not recognized, and sufficient brightness display of the screen from the front direction is obtained. Furthermore, the screen from an oblique (above 40°) direction is dark and the display contents cannot be sufficiently recognized from the oblique direction. In case of measuring a pattern contrast from the front direction, the pattern contrast is 1.1 and the brightness is 95% compared with the initial brightness (non-applying status of voltage).

### (Embodiment 3)

A viewing angle control apparatus is manufactured on condition that the liquid crystal material 18 is MJ29870 and Δn · d of the liquid crystal layer is 2 .5 *µ*m by a gap spacer 14 *µ*m. Other conditions are the same as in embodiment 1. By adjusting a voltage so that the pattern contrast from oblique (30°) direction is 7, the pattern contrast 8 of the screen from the oblique (40°) direction is obtained, which is effective to avoid spying. On the other hand, patterns (checkers) on the screen from the front direction are not recognized, and display contents on the screen can be sufficiently seen from the front direction. In case of measuring a pattern contrast from the front direction, the pattern contrast is 1.07 and the brightness is 92% compared with the initial brightness. As a result, a viewing angle control apparatus having good features is obtained.

### (Embodiment 4)

A viewing angle control apparatus is manufactured on condition that the liquid crystal material 18 is MLC6041 and Δn· d of the liquid crystal layer is 3.0 *µ*m by a gap spacer 19 *µ*m. Other conditions are the same as in embodiment 1. By adjusting a voltage so that the pattern contrast from oblique (30°) direction is 9, the pattern contrast 6 of the screen from the oblique (40°) direction is obtained, which is effective to avoid spying. On the other hand, patterns (checkers) on the screen from the front direction are not recognized, and display contents on the screen can be sufficiently seen from the front direction. In case of measuring a pattern contrast from the front direction, the pattern contrast is 1.04 and the brightness is 90% compared with the initial brightness. As a result, a viewing angle control apparatus having good features is obtained.

### (Example 1)

A viewing angle control apparatus is manufactured on condition that the liquid crystal material 18 is MLC6063 and Δn · d of the liquid crystal layer is 4.7 *µ*m by a gap spacer 5 *µ*m. Other conditions are the same as the embodiment 1. By adjusting a voltage so that the pattern contrast from oblique (30°) direction is 5, the pattern contrast 8 of the screen from the oblique (40°) direction is obtained, which is effective to avoid spying. On the other hand, patterns (checkers) on the screen from the front direction are clearly recognized and cause eyesore. Furthermore, brightness from the front direction greatly drops and the screen from the front direction is darkly seen. In case of measuring a pattern contrast from the front direction, the pattern contrast is 1.25 and the brightness is 70% (fallen) compared with the initial brightness.

### (Example 2)

A viewing angle control apparatus is manufactured on condition that the liquid crystal material 18 is MJ29870 and Δn · d of the liquid crystal layer is 1.1 *µ*m by a gap spacer 10 *µ*m. Other conditions are the same as in embodiment 1. By adjusting a voltage so that the pattern contrast from oblique (30°) direction is 5, patterns (checkers) from the front direction are clearly recognized and cause eyesore. In case of measuring a pattern contrast from the front direction, the pattern contrast is 1.3 and the screen (panel) is seen with color.

### (Example 3)

A viewing angle control apparatus is manufactured on condition that the liquid crystal material 18 is MJ022002 and Δn · d of the liquid crystal layer is 3.6 *µ*m by a gap spacer 19 *µ*m. Other conditions are the same as in embodiment 1. In this case, a voltage condition so that the pattern contrast from oblique (30°) direction is 5 is not found.

### (Embodiment 6)

A viewing angle control apparatus is manufactured on condition that rubbing is executed by a rectangle pattern on which an area ratio of alignment division patterns is 4:6. Other conditions are the same as in embodiment 1. This viewing angle control apparatus is carried on a liquid crystal display apparatus. By applying a voltage in the same way as in embodiment 1, an area ratio of a white region (bright region) and a black region (dark region) from the left direction is different from an area ratio of the white region and the black region from the right direction. However, spy prevention does not especially fall from either the left and right directions. As a result, a viewing angle control apparatus having good features is obtained.

### (Example 4)

A viewing angle control apparatus is manufactured on condition that rubbing is executed by a mask on which an area ratio of alignment division patterns is 3:7. Other condition is the same as the embodiment 6. This viewing angle control apparatus is carried on a liquid crystal display apparatus. By applying a voltage in the same way as the embodiment 6, the black area is largely seen from the right direction and display contents cannot be recognized. On the other hand, the white area is largely seen from the left direction and display contents can be recognized.

### (Embodiment 7)

A mask in which character part is clipped is prepared so that alignment division pattern forms a character as a whole. This pattern is designed so that an area of the character part is equal to an area of the mask excluding the character part. By mask rubbing with this mask, the viewing angle control apparatus is manufactured in the same way as in embodiment 1. This viewing angle control apparatus is carried on the liquid crystal display apparatus. By applying a voltage in the same way as in embodiment 6, a checker pattern is obtained. As a result, a viewing angle control apparatus having good features is obtained.

### (Embodiment 8)

By mask rubbing two times so that alignment direction of division regions are three (left side, right side, upper side), the viewing angle control apparatus is manufactured in the same way as in embodiment 1. This viewing angle control apparatus is carried on the liquid crystal display apparatus. By applying a voltage in the same way as in embodiment 1, it is confirmed that viewing from the left side, the right side, and the upper side can be prevented.

### (Embodiment 9)

A viewing angle control apparatus is manufactured in the same way as in embodiment 1. On the opposite side (not front side) of the viewing angle control apparatus, a polarizer is assembled so that an absorption axis is rotationally positioned as 90° from the absorption axis of the polarizer assembled on the front side of the viewing angle control apparatus. This viewing angle control apparatus is carried on CRT. By adjusting a voltage so that the pattern contrast from oblique (30°) direction is 5, the pattern contrast above 5 from oblique (30°~40°) direction is obtained. Furthermore, pattern (checkers) is not recognized from the front direction. As a result, a viewing angle control apparatus having good features is obtained.

### (Another embodiment)

For example, the transparent substrates 11 and 12 are not limited to a glass substrate, and may be a plastic substrate. As an alignment method of liquid crystal, optical alignment may be used except for rubbing. As an extraction method of electrodes, only one of two (upper side and lower side) transparent substrates may be used as an extraction opening by a transfer.

In the above embodiments, an angle between alignment directions 23 and 33 of facing areas 21 and 31 is 90° . However, a different angle, for example, angle range (90°±20°), may be used.

In the above embodiments, in order to set rising directions as the left and right directions on the viewing angle control apparatus, the alignment directions 23 and 33 are equally inclined as 45° from a side of the transparent substrates 11 and 12. However, for example, the alignment directions 23 and 33 may be differently inclined as 45° ±15° .

In the above embodiments, the polarizer 20 is carried so that the absorption axis is parallel with (or orthogonal to) alignment directions 23 and 33. However, the absorption axis may be shifted within a limit ±10°.

Other embodiments will be apparent to those skilled in the art from consideration of the specification and practice of the invention disclosed herein. It is intended that the specification and examples be considered as exemplary only, with the true scope and spirit of the invention being indicated by the following claims.

## Claims

1. An apparatus for controlling a viewing angle, comprising:
a first transparent substrate including a first transparent electrode;
a first alignment film including a plurality of first regions and second regions, the first alignment film being on the first transparent substrate;
a liquid crystal layer comprising a liquid crystal material aligned with twist, the liquid crystal layer being on the first alignment film;
a second alignment film including a plurality of third regions and fourth regions, a third region corresponding to the first region and a fourth region corresponding to the second region, alignment directions of the first region, the second region, the third region, and the fourth region being different, the second alignment film being placed on the liquid crystal layer;
a second transparent substrate including a second transparent electrode, the second transparent substrate being on the second alignment film; and
a polarizer on the second transparent substrate;
wherein, by applying a voltage to the first transparent electrode and the second transparent electrode, a transmittance ratio of the first region and the second region is above 5 in an angle range above 30° and below 40° from a normal direction of the liquid crystal layer, and a transmittance of the first alignment film from the normal direction is above 90% of the transmittance in case of non-applying the voltage.

2. The apparatus according to claim 1,
wherein the transmittance ratio of the first region and the second region is below 1.2 in the angle range below 5°.

3. The apparatus according to any preceding claim,
wherein a product Δn · d of a birefringence Δn and a cell gap d of the liquid crystal layer is above 1.5 *µ*m and below 3.0 *µm.*

4. The apparatus according to claim 3,
wherein the birefringence Δn is above 0.05 and below 0.3, and
wherein the cell gap d of the liquid crystal layer is above 2 *µ*m and below 30 *µ*m.

5. The apparatus according to any preceding claim,
wherein an angle between an alignment direction of the first region and an alignment direction of the third region is above 70° and below 110° .

6. The apparatus according to claim 5,
wherein an angle between a rising direction of a liquid crystal molecule of the first region and a rising direction of a liquid crystal molecule of the second region is above 160° and below 200°.

7. The apparatus according to claim 6,
wherein an angle between an absorption axis of the polarizer and an alignment direction of one of the third region and the fourth region is ±10°, and an angle between the absorption axis of the polarizer and an alignment direction of the other of the third region and the fourth region is above 80° and below 100° .

8. The apparatus according to any preceding claim,
wherein areas of the first region and the second region are respectively above 1mm² and below 1cm².

9. The apparatus according to any preceding claim,
wherein the first alignment film includes a plurality of fifth regions having an alignment direction different from the alignment directions of the first region and the second region, and
wherein the second alignment film includes a plurality of sixth regions having an alignment direction different from the alignment directions of the third region and the fourth region, the fifth regions corresponding to the sixth regions.

10. The apparatus according to claim 1,
wherein a ratio of areas of the first region and the second region is above 0.4 and below 0.6.

11. A display apparatus, comprising:
a display element including a first polarizer on a main face; and
a viewing angle control apparatus according to any preceding claim on the main face:
